Europäisches Patentamt

European Patent Office

Office européen des brevets

(19)

(11) Veröffentlichungsnummer: **0 004 311**
**B1**

(12) EUROPÄISCHE PATENTSCHRIFT

(45) Veröffentlichungstag der Patentschrift: **30.06.82**

(21) Anmeldenummer: **79100671.1**

(22) Anmeldetag: **07.03.79**

(51) Int. Cl.³: **C 08 L 23/12,**
C 08 L 23/08, C 08 L 31/04

(54) **Elastomere thermoplastische Mischungen aus Polypropylen und Ethylen-Vinylacetat-Copolymerisaten.**

(30) Priorität: **16.03.78 DE 2811550**

(43) Veröffentlichungstag der Anmeldung:
**03.10.79 Patentblatt 79/20**

(45) Bekanntmachung des Hinweises auf die Patenterteilung:
**30.06.82 Patentblatt 82/26**

(84) Benannte Vertragsstaaten:
**BE DE FR GB IT NL SE**

(56) Entgegenhaltungen:
**DE - A - 1 669 721**
**DE - A - 2 733 470**
**US - A - 3 847 728**

**CHEMICAL ABSTRACTS, Vol. 83, Nr. 2, 14. Juli
1975, Zusammenfassung Nr. 11550u, Seite 52
Columbus, Ohio, USA**

Die Akte enthält technische Angaben die nach dem
Eingang der Anmeldung eingereicht wurden und
die nicht in dieser Patentschrift enthalten sind.

(73) Patentinhaber: **BAYER AG**
**Zentralbereich Patente, Marken und Lizenzen**
**D-5090 Leverkusen 1, Bayerwerk (DE)**

(72) Erfinder: **Grigo, Ulrich, Dr.**
**Steinstrasse 161**
**D-4150 Krefeld (DE)**
Erfinder: **Merten, Josef, Dr.**
**In der Blankstrasse 33a**
**D-4052 Korschenbroich 1 (DE)**
Erfinder: **Binsack, Rudolf, Dr.**
**Bethelstrasse 4a**
**D-4150 Krefeld (DE)**

Courier Press, Leamington Spa, England.

Elastomere thermoplastische Mischungen aus Polypropylen und Ethylen-Vinylacetat-Copolymerisaten

Gegenstand der Erfindung sind elastomere thermoplastische Mischungen aus Polypropylen und einem teilvernetzten Ethylen-Vinylacetat-Copolymerisat (EVA).

Mischungen aus Polypropylen und Ethylen-Vinylacetat-Copolymerisaten sind bekannt.

So werden in der DE—A 1 811 799 Mischungen aus Polypropylen und partiell hydrolysierten Ethylen-Vinyl-acetate-Copolymerisaten beschrieben, während die DE—A 2 116 760 Mischungen aus mit Kautschuk gepfropftem Polypropylen und Ethylen-Propylen- bzw. Ethylen-Vinylacetat-Copolymerisaten beschreibt.

Mischungen aus Polypropylen und Ethylen-Vinylacetat-Copolymerisaten sind aus den japanischen Anmeldungen bzw. Patenten 24 533-68, 13 058-65, 8068-64, den französischen Patenten 1 316 788 und 1 321 201 und dem belgischen Patent 631.029 bekannt.

Die dort beschriebenen Mischungen aus Polypropylen und unvernetzten Ethylen-Vinylacetat-Copolymerisaten besitzen unbefriedigende elastiche Eigenschaften, z.B. in der bleibenden Dehnung und der Kerbschlagzähigkeit.

Aus der japanischen Patentanmeldung 70 48 196 sind Mischungen mit verbesserter Beständigkeit gegen Spannungsrißkorrosion aus einem Polyolefin und einem vernetzten, verseiften Ethylen-Vinylacetat-Copolymerisat bekannt. Das verseifte Copolymerisat ist jedoch ein thermoplastisches Harz und besitzt keine kautschukelastischen Eigenschaften mehr, die daher auch den Mischungen fehlen.

Aus der DE—A 1 669 721 sind Formmassen mit verbesserter Schlagzähigkeit bei tiefen Temperaturen aus Polypropylen und einem Kautschukelastischen Polymerisat bekannt, das mindestens 10 Gew.-% eines Diens einpolymerisiert enthalten muß. Nach der Abmischung der Komponenten erfolgt eine Vernetzung mit radikalbildenden Katalysatoren, was den Nachteil hat, daß davon dann zwangsläufig beide Komponenten der Formmasse erfaßt werden.

Überraschenderweise wurde gefunden, daß durch Verwendung von teilvernetzten Ethylen-Vinylacetat-Copolymerisaten mit Gelgehalten von 3—50 Gew.-% in Abmischungen mit isotaktischem Polypropylen Verbesserungen der elastischen Eigenschaften, speziell der Kerbschlagzähigkeit und bleibenden Dehnung, gegenüber Vergleichsmischungen mit unvernetzten Ethylen-Vinylacetate-Copolymerisaten erzielt werden. Als besonders geeignet haben sich Ethylen-Vinylacetat-Copolymerisate mit Gelanteilen von 5—40 Gew.-% erwiesen.

Gegenstand der Erfindung ist einen elastomere thermoplastische Mischung aus Polypropylen und einem Ethylen-Vinylacetat-Copolymerisat, dadurch gekennzeichnet, daß die Mischung besteht aus

A) 40—95 Gew.-% eines Polypropylens mit einem isotaktischen Anteil von mehr als 90 Gew.-% und einem Schmelzindex (IMI) von 3—20 g/10 min. bei 230°C und einer Belastung von 5 kg und

B) 5—60 Gew.-% eines teilvernetzten Ethylen-Vinylacetat-Copolymerisats, das einen Gelgehalt von 3—50 Gew.-% und einen Vinylacetat-Gehalt von 20—80 Gew.-% besitzt, wobei die Teilvernetzung vor dem Abmischen mit dem Polypropylen erfolgt ist.

Gegenstand der Erfindung ist auch ein Verfahren zur Herstellung einer solchen elastomeren thermoplastischen Mischung, dadurch gekennzeichnet, daß das Ethylen-Vinylacetat-Copolymerisat mit organischen Peroxiden, die Halbwertzeiten von mehr als 10 Minuten bei 100°C besitzen, vernetzt und in konventioneller Weise mit dem Polypropylen vermischt wird.

Die erfindungsgemäßen Mischungen besitzen neben den obengenannten Vorteilen auch ein verbessertes Entformungsverhalten im Vergleich zur Mischungen mit unvernetztem Ethylen-Vinylacetat-Copolymerisat.

Die erfindungsgemäß verwendeten Ethylen-Vinylacetat-Copolymerisate haben vor der Vernetzung Mooney-Viskositäten von 10—50 (ML$_{4+1}$, 100°C), eine Dichte von 0,93—1,2 g/cm$^3$ und einen Gelanteil unter 3 Gew.-%. Der Vinylacetat-Gehalt im Copolymeren beträgt 20—80 Gew.-%, vorzugsweise 25—60 Gew.-% und besonders bevorzugt 30—50 Gew.-%. Die Vinylacetat-Monomeren im Copolymerisat sind im allgemeinen statistisch verteilt. Die Schmelzwärme der Copolymerisate liegt unter 15 cal/g. Die Ethylen-Vinylacetat-Copolymerisate können nach bekannten Verfahren hergestellt werden (H. Streib et al., Kunststoffe 67 (1977/3).

Durch die Vernetzung können die Mooney-Viskositäten der Ethylen-Vinylacetat-Copolymerisate auf das 2- bis 3-fache steigen.

Die partielle Vernetzung der Ethylen-Vinylacetat-Copolymerisate kann mit jedem freie Radikale erzeugenden Vulkanisationsmittel erfolgen, wie z.B. organische Peroxide, die aromatischer oder aliphatischer Natur sein können, z.B. aromatische Diacylperoxide und aliphatische Diacylperoxide, Peroxide von zweibasischen Säuren, Ketonperoxide, Alkylperoxyester, Alkylhydroperoxide, wie Diacetylperoxid, Dibenzoylperoxid, Bis - 2,4 - dichlorbenzoylperoxid, Di - tert. - butyl - peroxid, Dicumylperoxid, tert. - Butylperbenzoat, tert. - Butylcumylperoxid, 2,5 - Bis - (tert. - Butylperoxy - 2,5 - dimethylcyclohexan, 1,3 - Bis - (tert. - butylperoxy - isopropyl) - benzol, Laurylperoxid, Bernsteinsäureperoxid, Cyclohexanonperoxid, tert. - Butylperoctoat und tert. - Butylhydroperoxid.

Brauchbar sind auch Azide als Vulkanisationsmittel wie Azidoformiate und aromatische Polyazide.

Als besonders geeignet haben sich organische Peroxide mit Halbwertzeiten von mehr als 10 min. bei 100°C erwiesen.

Die partielle Vernetzung der Ethylen-Vinylacetat-Copolymerisate erfolgt in Masse (Walzwerk, Innenmischer, Extruder). Wichtig ist hierbie, daß die Teilvernetzung des Ethylen-Vinylacetat-Copolymerisats vor dem Abmischen mit dem Polypropylen erfolgt, um einen Abbau des Polypropylens durch das Vulkanisationsmittel zu vermeiden.

Die Vernetzungsbedingungen (Art des Ethylen-Vinylacetat-Copolymerisats, Vernetzermenge und -art, Vernetzungsdauer und -temperatur) werden so gewählt, daß der Gelanteil im Ethylen-Vinylacetat-Copolymerisat 50 Gew.-% nicht übersteigt, um optimale Verbesserungen der elastischen Eigenschaften—speziell der bleibenden Dehnung und Kerbschlagzähigkeit—in Abmischungen mit Polypropylen zu erreichen. Die optimalen Werte für die oben genannten Parameter können durch Vorversuche leicht ermittelt werden. Der Vernetzungsgrad wird zweckmäßig durch Bestimmung des Gelgehaltes in Chlorbenzol ermittelt.

Bei der Vernetzung in masse ist es wichtig, das Vernetzungsmittel vor der eigentlichen Vernetzungsreaktion möglichst homogen zu verteilen, um beim nachfolgenden Vernetzungsprozeß lokale Übervernetzungen zu vermeiden. Die Vorvernetzung in Masse wird z.B. durch 5- bis 10-minütiges Kneten oder Walzen des Ethylen-Vinylacetat-Copolymerisats bei Temperaturen zwischen 80 und 240°C erreicht. Bei Verwendung der erwähnten Vernetzungsmittel richten sich Temperatur und Knetdauer weitgehend nach deren Halbwertzeit.

Das partiell vulkanisierte Mischpolymerisate stellt ein thermoplastisch verarbeitbares Material dar, das auf einem Walzwerk zu einem kontinuierlichen Fell oder Band geformt werden kann. Dieses Fell kann gegebenenfalls zerschnitten und granuliert werden.

Das Polypropylen im Gemische hat eine Dichte von ca. 0,90—0,92 g/cm$^3$ und einen Schmelzindex (IMI) von 3—20 g/10 min. bei 230°C und einer Belastung von 5 kg. Der isotaktische Anteil im Polypropylen soll über 90% liegen.

Die erfindungsgemäßen Mischungen enthalten 5—60 Gew.-% teilvernetztes Ethylen-Vinylacetat-Copolymerisat (EVA) und 40—95 Gew.-% Polypropylen. Als besonders geeignet haben sich Mischungen mit 10—45 Gew.-% teilvernetztem EVA und 55—90 Gew.-% Polypropylen erwiesen.

Das Vermischen des partiell vernetzten Ethylen-Vinylacetat-Copolymerisats mit dem Polypropylen kann in jeder zweckentsprechenden konventionellen Weise, z.B. auf einem Walzwerk, in einem Innenmischer oder in einem Extruder erfolgen. Die Mischungstemperatur soll hoch genug sein, um den Kunststoff zu erweichen bzw. aufzuschmelzen und ein gleichmäßiges Gemisch zu bilden.

Dem Gemisch können gewünschtenfalls Pigmente, Füllstoffe, Stabilisierungsmittel, Gleitmittel, Lichtschutzmittel oder andere geeignete oder modifizierende Ingredenzien einverleibt werden. Die erfindungsgemäßen Gemische stellen eine bemerkenswerte Kombination von Verarbeitbarketi (einschl. der Fähigkeit, widerholt verarbeitet werden zu können) mit guten physikalischen, vor allem elastischen Eigenschaften dar. Die erfindungsgemäßen Mischungen zeigen gegenüber entsprechenden Mischungen mit unvernetztem Ethylen-Vinylacetat-Copolymerisat eine ausgeprägte Verbesserung der elastischen Eigenschaften, wie bleibende Dehnung und Kerbschlagzähigkeit.

Die thermoplastischen Polymergemische gemäß der Erfindung eignen sich beispielsweise zur Herstellung von Autoteilen, wie Stoßstangen, Armaturenbretter, Autoinnenverkleidungen und Formteilen.

Beispiele 1—4 und Vergleichsbeispiel I und II

Als Ethylen-Vinylacetat-Copolymerisate wurden zwei Typen verwandt, die sich im Vinylacetat-Gehalt unterscheiden:

EVA 45 mit 45 Gew.-% Vinylacetat

EVA 35 mit 33 Gew.-% Vinylacetat

Das eingesetzte Polypropylen hatte ein Molekulargewicht ($M_w$) von ca. 300.000, einen Schmelzindex (IMI) von 7 g/10 min. bei 230°C und einer Belastung von 5 kg sowie einen isotaktischen Anteil von 95%.

Die Teilvernetzung des Ethylen-Vinylacetat-Copolymerisats wurde mit einem organischen Peroxid, das eine Halbwertzeit von 10 min. bei 160°C hatte, auf einem Innenkneter durchgeführt.

Die Massetemperaturen lagen zwischen 120 und 200°C. Die notwendige Menge an Peroxid wurde durch Vorversuche ermittelt. Das Knetprodukt wurde auf einer Walze (Walzentemperatur: 80—100°C) zum Fell ausgewalzt und anschließend zerschnitten.

Die Herstellung der Mischungen aus teilvernetztem EVA 45 bzw. EVA 33 und Polypropylen erfolgte bei einer Massetemperatur von 230—250°C.

Die erhaltene Mischung wurde gekühlt und anschließend granuliert.

Die Herstellung der Prüfkörper (Nr. 3 nach DIN 53 504) erfolgte auf einer Spritzgießmaschine bei 230°C. Zum Teil wurden aus dem Probekörper Nr. 3 jeweils die für die verschiedenen Prüfungen erforderlichen Probekörper mechanisch herausgearbeitet.

In den Beispielen 1—3, in denen Polypropylen mit teilvernetztem EVA 45 unterschiedlichen Gelgehaltes abgemischt wurde, sind Kerbschlagzähigkeit und bleibende Dehnung verbessert gegenüber

**0 004 311**

dem Vergleichsbeispiel I mit unvernetztem EVA 45. Eigenschaftsverbesserungen ähnlicher Größenordnung sind auch in Mischungen von Polypropylen mit teilvernetztem EVA 33 zu verzeichnen. Die Vicat-Temperatur (Wärmeformbeständigkeit) wird in allen Beispielen nicht oder nur geringfügig durch die Teilvernetzung vermindert (s. Tabelle).

Die Gelgehalte der teilvernetzten Ethylen-Vinylacetat-Copolymerisate werden auf bekannte Weise durch Lösen in Chlorbenzol, Cyclohexan oder Toluol bestimmt.

4

| Zusammensetzung | | Prüfvor-schrift | Beispiel 1 | Beispiel 2 | Beispiel 3 | Beispiel 4 | Vgl. Beispiel I | Vgl. Beispiel II |
|---|---|---|---|---|---|---|---|---|
| Polypropylen | Gew.-Tle | | 80 | 80 | 80 | 80 | 80 | 80 |
| EVA 45 | Gew.-Tle | | 20 | 20 | 20 | — | 20 | — |
| EVA 33 | Gew.-Tle | | — | — | — | 20 | — | 20 |
| Gel im EVA | Gew.-% | | 18 | 31 | 48 | 27 | — | — |
| **Prüfmethoden** | | | | | | | | |
| bleibende Dehnung | % | +) | 78 | 80 | 83 | 82 | 86,5 | 87 |
| Vicat-Temp. (VST/A) | °C | DIN 53 640 | 141 | 142 | 140 | 143 | 142 | 144 |
| Kerbschlagzähigk. $a_k$ bei 20°C | kJ/m² | DiN 53 453 | 28,7 | 26,5 | 18,0 | 24,6 | 15,2 | 14,9 |

+)bestimmt beim Zugversuch nach DIN 53 455

0 004 311

**0 004 311**

## Patentansprüche

1. Elastomere thermoplastische Mischung aus Polypropylen und einem Ethylen-Vinylacetat-Copolymerisat, dadurch gekennzeichnet, daß die Mischung besteht aus

A) 40—95 Gew.-% eines Polypropylenes mit einem isotaktischen Anteil von mehr als 90 Gew.-% und einen Schmelzindex (IMI) von 3—30 g/10 min. bei 230°C und einer Belastung von 5 kg und

B) 5—60 Gew.-% eines teilvernetzten Ethylen-Vinylacetat-Copolymerisats, das einen Gelgehalt von 3—50 Gew.-% und einen Vinylacetat-Gehalt von 20—80 Gew.-% besitzt, wobei die Teilvernetzung vor dem Abmischen mit dem Polypropylen erfolgt ist.

2. Elastomere thermoplastische Mischung nach Anspruch 1, dadurch gekennzeichnet, daß der Gelgehalt des Ethylen-Vinylacetat-Copolymerisats 5—40 Gew.-% beträgt.

3. Elastomere thermoplastische Mischung nach Anspruch 1 und 2, dadurch gekennzeichnet, daß das Ethylen-Vinylacetat-Copolymerisat 25—60 Gew.-% Vinylacetat enthält.

4. Elastomere thermoplastische Mischung nach Anspruch 1 bis 3, bestehend aus:

A) 55—90 Gew.-% Polypropylen

B) 10—45 Gew.-% teilvernetztem Ethylen-Vinylacetat-Copolymerisat.

5. Verfahren zur Herstellung einer elastomeren thermoplastischen Mischung nach Anspruch 1 bis 4, dadurch gekennzeichnet, daß das Ethylen-Vinylacetat-Copolymerisat mit organischen Peroxiden, die Halbwertzeiten von mehr als 10 Minuten bei 100°C besitzen, vernetzt und in konventioneller Weise mit dem Polypropylen vermischt wird.

## Claims

1. An elastomeric thermoplastic mixture of polypropylene and an ethylene/vinyl acetat copolymer, characterised in that the mixture consists of

A) 40—95% by weight of a polypropylene having an isotactic content of more than 90% by weight and a melt index (IMI) of 3—20 g/10 min. at 230°C and under a load of 5 kg and

B) 5—60% by weight of a partially crosslinked ethylene/vinyl acetate copolymer which has a gel content of 3—50% by weight and a vinyl acetate content of 20—80% by weight, wherein the partial crosslinkage has taken place before the admixture with the polypropylene.

2. An elastomeric thermoplastic mixture according to Claim 1, characterised in that the gel content of the ethylene/vinyl acetate copolymer is 5—40% by weight.

3. An elastomeric thermoplastic mixture according to Claim 1 and 2, characterisd in that the ethylene/vinyl acetate copolymer contains 25—60% by weight of vinyl acetate.

4. An elastomeric thermoplastic mixture according to Claim 1 to 3, consisting of:

A) 55—90% by weight of polypropylene and

B) 10—45% by weight of the partially crosslinked ethylene/vinyl acetate copolymer.

5. Process for the production of an elastomeric thermoplastic mixture according to Claim 1 to 4, characterised in that the ethylene/vinyl acetate copolymer is crosslinked with organic peroxides having half-life periods of more than 10 minutes at 100°C and mixed with the polypropylene in a conventional manner.

## Revendications

1. Mélange thermoplastique élastomère de polypropylène et d'un copolymère éthylène-acétate de vinyle, caractérisé en ce que le mélange consiste en:

A) 40 à 95% en poids d'un polypropylène présentant une fraction isotactique supérieure à 90% en poids et und indice fusion (IMI) de 3 à 20 g/10 min à 230°C sous une charge de 5 kg, et

B) 5 à 60% en poids d'un copolymère éthylène-acétate de vinyle partiellement réticulé présentant une teneur en gel de 3 à 50% en poids et une teneur en acétate de vinyle de 20 à 80% en poids, la réticulation partielle ayant été effectuée avant mélange avec le polypropylène.

2. Mélange thermoplastique élastomère selon la revendication 1, caractérisé en ce que la teneur en gel du copolymère éthylène-acétate de vinyle est de 5 à 40% en poids.

3. Mélange thermoplastique élastomère selon les revendications 1 et 2, caractérisé en ce que le copolymère éthylène-acétate de vinyle contient de 25 à 60% en piods d'acétate de vinyle.

4. Mélange thermoplastique élastomère selon les revendications 1 à 3, consistant en:

A) 55 à 90% en poids de polypropylène,

B) 10 à 45% en poids de copolymère éthylène-acétate de vinyle partiellement réticulé.

5. Procédé de préparation d'un mélange thermoplastique élastomère selon les revendications 1 à 4, caractérisé en ce que l'on réticule le copolymère éthylène-acétate de vinyle à l'aide de peroxydes organiques possédant une période supérieure à 10 min à 100°C et on mélange avec le polypropylène par des moyens classiques.

6